# EUROPÄISCHE PATENTSCHRIFT

(11) **EP 0 772 539 B1**
(45) Veröffentlichungstag und Bekanntmachung des Hinweises auf die Patenterteilung: **06.10.1999**
(21) Anmeldenummer: 95925850.0
(22) Anmeldetag: 08.07.1995
(51) Int. Cl.: B60T 8/32, B60T 8/26

(54) **ELEKTRONISCH REGELBARES BLOCKIERGESCHÜTZTES BREMSBETÄTIGUNGSSYSTEM**
ELECTRONICALLY CONTROLLABLE ANTILOCK BRAKE ACTUATION SYSTEM
SYSTEME D'ACTIONNEMENT DE FREINS A REGULATION ELECTRONIQUE ANTI-BLOCAGE

(30) Priorität: 28.07.1994 DE 4426682
(43) Veröffentlichungstag der Anmeldung: 14.05.1997
(73) Patentinhaber: Continental Teves AG & Co. oHG, 60488 Frankfurt (DE)
(72) Erfinder: FEIGEL, Hans-Jörg, D-61191 Rosbach (DE); NEUMANN, Ulrich, D-64380 Rossdorf (DE); KLEIN, Andreas, D-61350 Bad Homburg (DE); SCHIEL, Lothar, D-65719 Hofheim (DE)
(86) Internationale Anmeldenummer: EP9502665
(87) Internationale Veröffentlichungsnummer: WO9603300

(56) Entgegenhaltungen:
- DE-A- 2 208 936
- DE-A- 3 342 555
- DE-A- 3 424 912
- DE-A- 4 229 041
- DE-C- 4 003 579
- DE-C- 4 102 497
- GB-A- 2 100 816
- US-A- 3 523 713
- US-A- 4 812 777
- US-A- 5 143 429
- US-A- 5 312 172

## Beschreibung

Die Erfindung betrifft ein elektronisch regelbares blockiergeschütztes Bremsbetätigungssystem für Kraftfahrzeuge, mit einem mittels eines Betätigungspedals betätigbaren Hauptbremszylinder, mit durch eine elektronische Steuereinheit ansteuerbaren Bremsdruckgebern, an deren Druckräume die Radbremsen des Fahrzeuges angeschlossen sind und deren Druckräume über mittels Ventileinrichtungen absperrbare hydraulische Verbindungen mit den Druckräumen des Hauptbremszylinders verbindbar sind, mit mindestens einer Sensoreinrichtung zur Erkennung des Fahrerverzögerungswunsches sowie mit mindestens einer mit dem Hauptbremszylinder zusammenwirkenden Simulatorkammer.

Ein derartiges Bremsbetätigungssystem ist z.B. aus der DE-A 34 24 912 bekannt. Das Absperren der hydraulischen Verbindungen zwischen den Bremsdruckgebern und dem Hauptbremszylinder erfolgt bei dem vorbekannten Bremsbetätigungssystem mittels in den Hydraulikzylindern der Bremsdruckgeber ausgebildeter Bohrungen (Schnüffellöcher), die bei Betätigung der Bremsdruckgeber von an deren Kolben angeordneten Dichtmanschetten überfahren werden.

Für einen Einsatz im blockiergeschützten Bremsanlagen ist das vorbekannte Bremsbetätigungssystem jedoch weniger geeignet. So erlauben die absperrbaren hydraulischen Verbindungen in einem ABS-Regelfall nicht den Abbau des in den Radbremsen herrschenden hydraulischen Druckes auf nahe Null bar, da bei der hierzu erforderlichen vollständigen Rückstellbewegung des Bremsdruckgeberkolbens die vorhin genannte Bohrung freigegeben würde, an der der vom Fahrer erzeugte, verhältnismäßig hohe Druck ansteht.

Für eine ABS-Regelung weniger vorteilhaft sind auch die in den Hydraulikzylindern der Bremsdruckgeber ausgebildeten Kammern, in die das vom Fahrer des Fahrzeugs verdrängte Druckmittelvolumen hineingeleitet wird, um bei Betätigung das für den Fahrer gewöhnliche Pedalgefühl aufrechtzuerhalten. Die Antriebe der Bremsdruckgeber müssen in jedem Fall aktiv die Rückstellbewegung der Druckgeberkolben gewährleisten, so daß hohe Kosten für eine Vier-Quadranten-Ansteuerelektronik sowie eine Auslegung für maximale Betätigungskraft erforderlich sind. Außerdem erfolgt die Pedalrückstellung ungedämpft gegen den Fahrerfuß.

Schließlich erfolgt die direkte Betätigung der durch die Kombination Bohrung (Schnüffelloch) Dichtmanschette gebildeten Ventileinrichtung durch den elektrischen Antrieb real aufgrund der nicht vernachlässigbaren Massenträgheiten mit einer Zeitverzögerung, die ihrerseits ein Einströmen eines beachtlichen Druckmittelvolumens zur Folge hat, so daß ein Druckabbau auf Werte nahe Null bar nicht möglich ist. Dadurch werden insbesondere Regelvorgänge bei niedrigen µ-Werten beeinträchtigt.

Weiterhin ist aus der DE-A 42 29 041 ein elektronisch regelbares, ausfallsicheres Bremsbetätigungssystem bekannt, bei dem sowohl der Hauptbremszylinder als auch die elektrisch ansteuerbaren, mit eigenem Druckmittelvorratsbehälter ausgestatteten Bremsdruckgeber über ein elektromagnetisch betätigbares 3/2-Wegeventil mit den Radbremsen verbindbar sind. In einer ersten Schaltstellung des 3/2-Wegeventils besteht eine hydraulische Verbindung zwischen dem Hauptbremszylinder bzw. dem Druckgeber und der Radbremse, während die Verbindung zwischen dem Druckgeber bzw. dem Hauptbremszylinder und der Radbremse abgesperrt ist. In einer zweiten Schaltstellung stellt das 3/2-Wegeventil eine hydraulische Verbindung zwischen dem Druckgeber bzw. dem Hauptbremszylinder und der Radbremse her, während die Verbindung zwischen dem Hauptbremszylinder bzw. dem Druckgeber und der Radbremse abgesperrt wird. Durch die genannten Maßnahmen wird bei intaktem System der Fahrer von der Radbremse getrennt und spürt ein hartes Pedal. Dadurch, daß die Bremsdruckgeber mit eigenen Druckmittelvorratsbehältern ausgestattet sind, müssen sie bei einem Stromausfall von den Radbremsen getrennt werden, so daß aufwendige Ventile verwendet werden müssen.

Es ist daher Aufgabe der vorliegenden Erfindung ein elektronisch regelbares blockiergeschütztes Bremsbetätigungssystem der eingangs genannten Gattung dahingehend zu verbessern, daß insbesondere die bei einer ABS-Regelung genannten Nachteile weitgehendst vermieden werden. Gleichzeitig soll eine Verkürzung der Ansprechzeit bei gleichzeitiger Erhöhung der Dynamik, insbesondere bei schneller Betätigung, erreicht werden.

Diese Aufgabe wird erfindungsgemäß dadurch gelöst, daß die Ventileinrichtungen als Elektromagnetventile ausgebildet sind, die bei einem Druckaufbau durch die elektronische Steuereinheit nach der Erkennung des Fahrerverzögerungswunsches zeitverzögert angesteuert werden, wobei an die Druckräume der Bremsdruckgeber Niederdruckspeicher angeschlossen sind, die in der Lösestellung der Bremsdruckgeber mit den Radbremsen in Verbindung gebracht werden.

Eine kostengünstig herstellbare, kompakt bauende vorteilhafte Weiterbildung des erfindungsgemäßen Bremsbetätigungssystems zeichnet sich dadurch aus, daß die Verbindung zwischen dem Niederdruckspeicher und dem Druckraum des Bremsdruckgebers mittels einer durch die Bewegung des Druckgeberkolbens betätigbaren Ventileinrichtung absperrbar ist, die vorzugsweise durch mindestens eine im Druckgeberkolben ausgebildete, mit dem Niederdruckspeicher in Verbindung stehende und im Druckraum mündende Bohrung gebildet ist, die mit einer in axialem Abstand angeordneten Dichtmanschette zusammenwirkt.

Ein vollständiges Entleeren des Niederdruckspeichers am Ende jeder Bremsung wird bei einer vorteilhaften Weiterbildung des Erfindungsgegenstandes dadurch erreicht, daß der Niederdruckspeicher über ein zum Hauptbremszylinder hin öffnendes Rückschlagventil mit dem Hauptbremszylinder verbunden ist.

Eine reibungsarme Umwandlung einer Dreh in eine Linearbewegung erfolgt insbesondere bei einer vorteilhaften Weiterbildung der Erfindung, bei der die Bremsdruckgeber durch Hydraulikzylinder gebildet sind, deren Kolben mittels elektrisch ansteuerbarer Gleichstrommotoren betätigbar sind, dadurch, daß die Betätigung mittels eines zwischen Kolben und Gleichstrommotor geschalteten Kugelgewindetriebs erfolgt. Dabei ist es sinnvoll, wenn die Welle des Gleichstrommotors hohl ausgebildet ist und die Spindel des Kugelgewindetriebs aufnimmt. Durch diese Maßnahmen wird eine einfache Montage der Bremsdruckgeber bzw. eine einfache Ausbildung der Spindel erreicht. Zudem weisen die Bremsdruckgeber eine kurze Bauform auf.

Eine einwandfreie Führung der Spindel wird bei einer vorteilhaften weiteren Ausgestaltung der Erfindung dadurch erreicht, daß die Spindel mit einem senkrecht zu ihrer Achse angeordneten Querstift versehen ist, der eine Rolle trägt, die in einem in einem koaxial zur Welle angeordneten Führungsrohr ausgebildeten Schlitz geführt ist.

Bei einer anderen vorteilhaften Weiterbildung des Erfindungsgegenstandes erfolgt die Übertragung der Betätigungskraft von der Spindel auf den Druckgeberkolben mittels eines im Druckgeberkolben geführten Kraftübertragungsglieds, an dem der Druckgeberkolben unter Zwischenschaltung einer Druckfeder gefesselt ist.

Eine besonders kompaktbauende Ausführung des Erfindungsgegenstandes wird schließlich nach einem weiteren vorteilhaften Erfindungsmerkmal dadurch erreicht, daß das Elektromagnetventil, das Rückschlagventil sowie der Niederdruckspeicher im Gehäuse des Hydraulikzylinders angeordnet sind.

Die Erfindung wird in der nachfolgenden Beschreibung von einem Ausführungsbeispiel unter Bezugnahme auf die beiliegende Zeichnung näher erläutert. In der Zeichnung zeigt:
- Fig. 1: ein Schaltbild einer Ausführung des erfindungsgemäßen Bremsbetätigungssystems und
- Fig. 2: einen Bremsdruckgeber nach Fig. 1 im Axialschnitt in vergrößertem Maßstab.

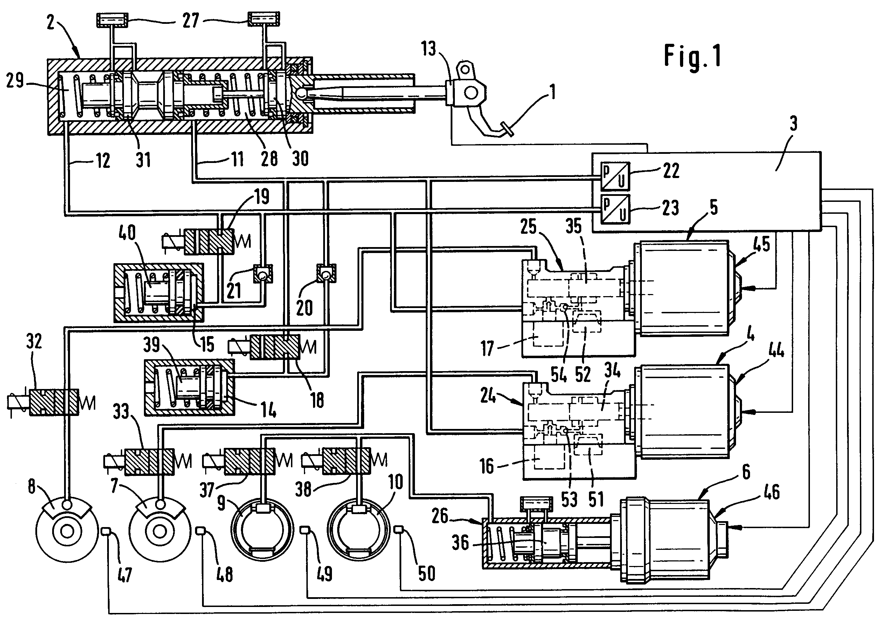

Das in der Figur 1 dargestellte, elektronisch regelbare Bremsbetätigungssystem nach einer Ausführungsform der Erfindung ist für ein Fahrzeug mit Vorderradantrieb vorgesehen. Es besteht aus einem mittels eines Betätigungspedals 1 betätigbaren, zweikreisigen Hauptbremszylinder bzw. Tandemhauptzylinder 2, der durch zwei Kolben 30,31 begrenzte, voneinander getrennte Druckräume 28,29 aufweist, die mit einem drucklosen Druckmittelvorratsbehälter 27 in Verbindung stehen. Der erste Druckraum (Primärdruckraum) 28 steht mittels einer absperrbaren ersten hydraulischen Leitung 11 in Verbindung mit einem elektrisch ansteuerbaren ersten Bremsdruckgeber 4, an den eine der Vorderachse zugeordnete hydraulische Radbremse 7 angeschlossen ist. Das Absperren der Leitung 11 erfolgt mittels eines ersten Elektromagnetventils 16, während in den Leitungsabschnitt zwischen dem ersten Bremsdruckgeber 4 und der Radbremse 7 ein ebenso elektromagnetisch betätigbares Trennventil 33 eingefügt ist. Außerdem ist an den ersten Druckraum 28 über eine Parallelschaltung eines elektromagnetisch betätigbaren 2/2-Wegeventils 18 und eines zum Hauptbremszylinder 2 hin öffnenden Rückschlagventils 20 eine durch einen federnd vorgespannten Kolben 39 begrenzte erste Simulatorkammer 14 angeschlossen. Der zweite Druckraum (Sekundärdruckraum) 29 steht über eine mittels eines zweiten Elektromagnetventils 17 absperrbare zweite hydraulische Leitung 12 mit einem zweiten elektrisch ansteuerbaren Bremsdruckgeber 5, an den die andere, der Vorderachse zugeordnete hydraulische Radbremse 8 angeschlossen ist, der ein elektromagnetisch betätigbares Trennventil 32 vorgeschaltet ist. Außerdem ist an den zweiten Druckraum 29 über eine Parallelschaltung eines zweiten elektromagnetisch betätigbaren 2/2-Wegeventils 19 sowie eines zum Hauptbremszylinder 2 hin öffnenden, zweiten Rückschlagventils 21 eine durch einen federnd vorgespannten zweiten Kolben 40 begrenzte zweite Simulatorkammer 15 angeschlossen. An die nicht näher bezeichneten Druckräume der Bremsdruckgeber 4,5 sind über in der Lösestellung der Bremsdruckgeber 4,5 offene hydraulische Verbindungen Niederdruckspeicher 51,52 angeschlossen, die unter Zwischenschaltung zum Hauptbremszylinder 2 hin öffnender Rückschlagventile 53,54 über die vorhin erwähnten hydraulischen Leitungen 11,12 mit dem Hauptbremszylinder 2 verbunden sind. An einen dritten Bremsdruckgeber 6 sind über weitere Trennventile 37,38 beide ggf. der Hinterachse zugeordneten hydraulischen Radbremsen 9,10 angeschlossen. Alle drei Bremsdruckgeber 4,5,6 bestehen aus je einem Hydraulikzylinder 24,25,26, in dem je ein Kolben 34,35,36 verschiebbar geführt ist, der durch je einen vorzugsweise reversierbaren Gleichstrommotor 44,45,46 antreibbar ist. Der gemeinsamen Ansteuerung der Gleichstrommotoren 44,45,46 sowie der Elektromagnetventile 16,17,18,19,32,33,37,38 dient eine elektronische Steuereinheit 3, der als Eingangsgrößen die Ausgangssignale eines mit dem Betätigungspedal 1 zusammenwirkenden Bremslichtschalters 13, sowie zweier Drucksensoren 22,23 zugeführt werden, die an die Druckräume 28,29 des Tandemhauptzylinders 2 angeschlossen sind und die eine Fahrerverzögerungswunscherkennung ermöglichen. Dabei ist es besonders vorteilhaft, wenn die Drucksensoren 22,23 als Bestandteile der elektronischen Steuereinheit 3 ausgebildet sind. Zur Fahrerverzögerungswunscherkennung können jedoch auch andere Mittel, beispielsweise ein die Betätigungskraft am Betätigungspedal 1 sensierender Kraftsensor verwendet werden.

Außerdem sind den einzelnen, nicht gezeigten Rädern Radsensoren 47,48,49,50 zugeordnet, deren der Fahrgeschwindigkeit entsprechende Ausgangssignale als weitere Eingangsgrößen der elektronischen Steuereinheit 3 zugeführt werden.

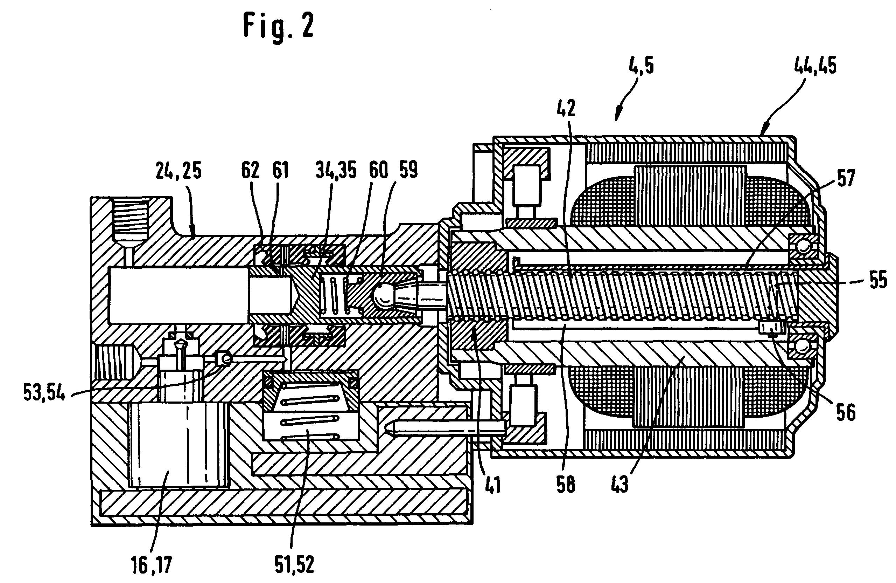

Wie insbesondere der Fig. 2 zu entnehmen ist, erfolgt die Betätigung des Kolbens 34,35 des Bremsdruckgebers 4,5 mittels eines Kugelgewinde- bzw. Spindel-Mutter-Triebs 41, dessen Spindel 42 verdrehgesichert in einer vorzugsweisen hohlen Welle 43 des Gleichstrommotors 44,45 angeordnet ist. Die Verdrehsicherung erfolgt mittels eines senkrecht zur Längsachse der Spindel 42 darin angeordneten Querstifts 55, der eine Rolle 56 trägt, die in einem in einem koaxial zur Welle 43 angeordneten Führungsrohr 57 ausgebildeten Schlitz 58 geführt ist.

Die Übertragung der vom Elektromotor 44,45 aufgebrachten Betätigungskraft auf den Bremsdruckgeberkolben 34,35 erfolgt dabei vorzugsweise mittels eines mit der Spindel 42 verbundenen Kraftübertragungsglieds 59, der im Bremsdruckgeberkolben 34,35 geführt und an dem der Kolben 34, 35 unter Zwischenschaltung einer Druckfeder 60 gefesselt ist.

Außerdem ist es besonders vorteilhaft, wenn der vorhin erwähnte Niederdruckspeicher 51,52, das Rückschlagventil 53,54 sowie das Elektromagnetventil 16,17 im Gehäuse des Hydraulikzylinders 24,25 angeordnet sind. Die Verbindung zwischen dem Niederdruckspeicher 51,52 und dem jeweiligen Druckraum des Hauptzylinders 24,25 ist mittels einer Ventileinrichtung absperrbar, die durch eine im Kolben 34,35 ausgebildete, mit dem Niederdruckspeicher 51,52 in Verbindung stehende, und andererseits im Druckraum mündende Bohrung 61 sowie eine in axialem Abstand davon angeordnete Dichtlippe einer Dichtmanschette 62 gebildet ist, so daß bei Überfahren der Dichtlippe die Verbindung zwischen der Bohrung 61 und dem Niederdruckspeicher 51,52 unterbrochen wird.

Das in Fig. 1 der Zeichnung dargestellte Bremsbetätigungssystem funktioniert wie folgt:

Wird ein Bremsvorgang durch Niederdrücken des Bremsbetätigungspedals 1 eingeleitet, so wird der Betätigungszustand vom Bremslichtschalter 13 erkannt und der elektronischen Steuereinheit 3 mitgeteilt, deren Steuersignale ein Umschalten der Ventile 16,17,18,19, und dadurch eine Trennung der Hauptzylinderdruckräume 28,29 von den Bremsdruckgebern 4,5 sowie deren Verbindung mit den Simulatorkammern 14,15 bewirken. Das Umschalten der Elektromagnetventile 16,17 erfolgt dabei vorzugsweise mit einer vorher bestimmbaren Zeitverzögerung, so daß insbesondere bei einer schnellen Betätigung ein hydraulischer Druck in den Bremsen 7,8 sehr schnell aufgebaut werden kann. Durch die Drucksensoren 22 und 23 erfolgt eine zweite Meldung des Fahrerverzögerungswunsches an die elektronische Steuereinheit 3, die mit der darin installierten Bremskraftverteilung die gewünschten Bremsmomente an den Fahrzeugachsen errechnet. Die den errechneten Bremsmomenten entsprechenden Steuersignale werden den Gleichstrommotoren 44,45,46 der Bremsdruckgeber 4,5,6 zugeführt, die ein Verschieben der Bremsdruckgeberkolben 34,35,36 in Betätigungsrichtung und somit eine Druckerhöhung in den Radbremsen 7 bis 10 einleiten. Das für den Fahrer gewöhnliche, bei einem Bremsvorgang spürbare Pedalgefühl wird durch die nun offene Verbindung zwischen dem Hauptbremszylinder 2 und den Simulatorkammern 14,15 gewährleistet. Die in den zu den Radbremsen 7 bis 10 führenden Leitungsabschnitten eingefügten Trenn- bzw. Multiplexventile 32,33,37,38 bleiben offen.

Ein Druckabbau erfolgt durch Zurückfahren der Kolben 34,35,36, unter Umständen durch aktive Drehrichtungsumkehr der Gleichstrommotoren 44,45,46. Das vom Fahrer in die Radbremsen 7,8 eingebrachte Druckmittel-Zusatzvolumen wird insbesondere in der Druckabbauphase einer ABS-Regelung von den Niederdruckspeichern 51,52 aufgenommen, die am Ende der Bremsung über die Rückschlagventile 53,54 sowie über die Druckräume 28,29 des Hauptbremszylinders 2 in den Druckmittelvorratsbehälter 27 entleert werden.

Durch die letztgenannten Maßnahmen wird eine Erhöhung der Dynamik des Bremsvorganges erreicht. Eine Druckhaltephase wird realisiert, indem die Trenn- bzw. Multiplexventile 32,33,37,38 in ihre Sperrstellung umgeschaltet werden.

Eine ABS-Regelung wird demnach dreikanalig (Vorderachse -zweikanalig, Hinterachse-einkanalig) im Regelmodus mit den Raddrehzahlsensoren 47,48,49,50 durchgeführt, wobei die Bremsdruckmodulation an der Hinterachse beispielsweise nach dem "select-low"-Prinzip erfolgen kann.

Bei einer Antriebsschlupfregelung oder bei einer Fahrstabilitätsregelung werden die Trennventile im Multiplex-Modus angesteuert. Dadurch kann auf einen vierten Bremsdruckgeber verzichtet werden.

Bei einem Ausfall der Elektronik/Fahrzeugelektrik gehen alle Ventile in den stromlosen Zustand. Dabei werden beide der Vorderachse zugeordneten Radbremsen 7,8 über die stromlos offenen Ventile 16,17 mit dem Tandemhauptzylinder 2 verbunden, so daß die gesetzlich geforderten Bestimmungen bei Ausfall der Elektronik erfüllt werden.

Bei einem hydraulischen Ausfall der der Vorderachse zugeordneten Bremskreise kann immer mit dem der Hinterachse zugeordneten Kreis die gesetzlich geforderte Bremswirkung "brake-by-wire" erreicht werden. Bei Ausfall des der Hinterachse zugeordneten hydraulischen Kreises ist durch die Verwendung des Bremslichtschalters 13 bzw. der Drucksensoren 22,23 sichergestellt, daß über die angetriebene Vorderachse die Bremswirkung "brake-by-wire" erreicht wird.

## Patentansprüche

1. Elektronisch regelbares blockiergeschütztes Bremsbetätigungssystem für Kraftfahrzeuge, mit einem mittels eines Betätigungspedals (1) betätigbaren Hauptbremszylinder (2), mit durch eine elektronische Steuereinheit (3) ansteuerbaren Bremsdruckgebern (4,5), an deren Druckräume die Radbremsen (7,8) des Fahrzeuges angeschlossen sind und deren Druckräume über mittels Ventileinrichtungen (16,17) absperrbare hydraulische Verbindungen (11,12) mit den Druckräumen (28,29) des Hauptbremszylinders (2) verbindbar sind, mit mindestens einer Sensoreinrichtung (13) zur Erkennung des Fahrerverzögerungswunsches sowie mit mindestens einer mit dem Hauptbremszylinder (2) zusammenwirkenden Simulatorkammer (14,15), dadurch **gekennzeichnet**, daß die Ventileinrichtungen als Elektromagnetventile (16,17) ausgebildet sind, die bei einem Druckaufbau durch die elektronische Steuereinheit (23) nach der Erkennung des Fahrerverzögerungswunsches zeitverzögert angesteuert werden, wobei an die Druckräume der Bremsdruckgeber (4,5) Niederdruckspeicher (51,52) angeschlossen sind, die in der Lösestellung der Bremsdruckgeber (4,5) mit den Radbremsen (7,8) in Verbindung gebracht werden.

2. Elektronisch regelbares blockiergeschütztes Bremsbetätigungssystem nach Anspruch 1, dadurch **gekennzeichnet**, daß die Verbindung zwischen dem Niederdruckspeicher (51,52) und dem Druckraum des Bremsdruckgebers (4,5) mittels einer durch die Bewegung des Druckgeberkolbens (34,35) betätigbaren Ventileinrichtung (61,62) absperrbar ist.

3. Elektronisch regelbares blockiergeschütztes Bremsbetätigungssystem nach Anspruch 2, dadurch **gekennzeichnet**, daß die Ventileinrichtung (61,62) durch mindestens eine im Druckgeberkolben (34,35) ausgebildete, mit dem Niederdruckspeicher (51,52) in Verbindung stehende und im Druckraum mündende Bohrung (61) gebildet ist, die mit einer in axialem Abstand angeordneten Dichtmanschette (62) zusammenwirkt.

4. Elektronisch regelbares blockiergeschütztes Bremsbetätigungssystem nach einem der Ansprüche 1 bis 3, dadurch **gekennzeichnet**, daß der Niederdruckspeicher (51,52) über ein zum Hauptbremszylidner (2) hin öffnendes Rückschlagventil (53,54) mit dem Hauptbremszylinder (2) verbunden ist.

5. Elektronisch regelbares blockiergeschütztes Bremsbetätigungssystem nach einem der vorhergehenden Ansprüche, wobei die Bremsdruckgeber (4,5) durch Hydraulikzylinder (24,25) gebildet sind, deren Kolben (34,35) mittels elektrisch ansteuerbarer Gleichstrommotoren (44,45) betätigbar sind, dadurch **gekennzeichnet**, daß die Betätigung mittels eines zwischen Kolben (34,35) und Gleichstrommotor (44,45) geschalteten Kugelgewindetriebs (41) erfolgt, wobei die Welle (43) des Gleichstrommotors (44,45) hohl ausgebildet ist und die Spindel (42) des Kugelgewindetriebs (41) aufnimmt.

6. Elektronisch regelbares blockiergeschütztes Bremsbetätigungssystem nach Anspruch 5, dadurch **gekennzeichnet**, daß die Spindel (42) mit einem senkrecht zu ihrer Achse angeordneten Querstift (55) versehen ist, der eine Rolle (56) trägt, die in einem in einem koaxial zur Welle (43) angeordneten Führungsrohr (57) ausgebildeten Schlitz (58) geführt ist.

7. Elektronisch regelbares blockiergeschütztes Bremsbetätigungssystem nach Anspruch 5 oder 6, dadurch **gekennzeichnet**, daß die Übertragung der Betätigungskraft von der Spindel (42) auf den Druckgeberkolben (34,35) mittels eines im Druckgeberkolben (34,35) geführten Kraftübertragungsglieds (59) erfolgt, an dem der Druckgeberkolben (34,35) unter Zwischenschaltung einer Druckfeder (60) gefesselt ist.

8. Elektronisch regelbares blockiergeschütztes Bremsbetätigungssystem wenigstens nach den Ansprüchen 3 und 5, dadurch **gekennzeichnet**, daß das Elektromagnetventil (16,17), das Rückschlagventil (53,54) sowie der Niederdruckspeicher (51,52) im Gehäuse des Hydraulikzylinders (24,25) angeordnet sind.

## Claims

1. Electronically controllable anti-lock brake actuation system for automotive vehicles, including a master brake cylinder (2) operable by an actuating pedal (1), braking pressure generators (4, 5) actuatable by an electronic control unit (3), the wheel brakes (7, 8) of the vehicle being connected to the pressure chambers of the braking pressure generators (4, 5), the said pressure chambers being connectable to the pressure chambers (28, 29) of the master brake cylinder (2) by way of hydraulic connections (11, 12) closable by valve assemblies (16, 17), at least one sensor device (13) to identify the driver's wish for deceleration, and at least one simulator chamber (14, 15) which interacts with the master brake cylinder (2),
**characterized** in that the valve assemblies are configured as solenoid valves (16, 17) which are actuated by the electronic control unit (23) with time delay during pressure increase after the driver's wish for deceleration has been identified, and low-pressure accumulators (51, 52) are connected to the pressure chambers of the braking pressure generators (4, 5) to be connected to the wheel brakes (7, 8) in the release position of the braking pressure generators (4, 5).

2. Electronically controllable anti-lock brake actuation system as claimed in claim 1,
**characterized** in that the connection between the low-pressure accumulator (51, 52) and the pressure chamber of the braking pressure generator (4, 5) is closable by a valve assembly (61, 62) that is operable by the movement of the pressure generator piston (34, 35).

3. Electronically controllable anti-lock brake actuation system as claimed in claim 2,
**characterized** in that the valve assembly (61, 62) is configured as at least one bore (61) in the pressure generator piston (34, 35), which bore is connected to the low-pressure accumulator (51, 52), opens into the pressure chamber and interacts with a sealing sleeve (62) spaced axially therefrom.

4. Electronically controllable anti-lock brake actuation system as claimed in any one of claims 1 to 3,
**characterized** in that the low-pressure accumulator (51, 52) is connected to the master brake cylinder (2) by way of a non-return valve (53, 54) which opens towards the master brake cylinder (2).

5. Electronically controllable anti-lock brake actuation system as claimed in any one of the preceding claims, wherein the braking pressure generators (4,5) are configured as hydraulic cylinders (24, 25) having their pistons (34, 35) operated by way of electrically actuatable direct-current motors (44, 45),
**characterized** in that the actuation is effected by a ball-and-thread drive assembly (41) interposed between the pistons (34, 35) and the direct-current motor (44, 45), and the shaft (43) of the direct-current motor (44, 45) is hollow and accommodates the spindle (42) of the ball-and-thread drive assembly (41).

6. Electronically controllable anti-lock brake actuation system as claimed in claim 5,
**characterized** in that the spindle (42) includes a transverse pin (55), arranged vertically to the axis of the spindle, which carries a roller (56) guided in a slot (58) in a guide tube (57) that is arranged coaxially to the shaft (43).

7. Electronically controllable anti-lock brake actuation system as claimed in claim 5 or claim 6,
**characterized** in that the actuating force is transmitted from the spindle (42) to the pressure generator piston (34, 35) by way of a force-transmitting member (59) guided in the pressure generator piston (34, 35), the pressure generator piston (34, 35) being fixed to the force-transmitting member (59) by the intermediary of a compression spring (60).

8. Electronically controllable anti-lock brake actuation system as claimed in at least claims 3 and 5,
**characterized** in that the solenoid valve (16, 17), the non-return valve (53, 54) and the low-pressure accumulator (51, 52) are accommodated in the housing of the hydraulic cylinder (24, 25).

## Revendications

1. Système d'actionnement de freins à antiblocage et régulation électronique pour véhicules automobiles, comportant un maître-cylindre (2) pouvant être actionné au moyen d'une pédale d'actionnement (1), des générateurs de pression de freinage (4,5) qui peuvent être commandés par une unité de commande électronique (3) et aux chambres de pression desquels sont raccordés les freins (7,8) des roues du véhicule et dont les chambres de pression peuvent être reliées aux chambres de pression (28,29) du maître-cylindre (2) par l'intermédiaire de liaisons hydrauliques (11,12) pouvant être bloquées à l'aide de dispositifs formant soupapes (16,17), au moins un dispositif formant capteur (13) pour identifier le souhait de décélération du conducteur, et au moins une chambre de simulateur (14,15) coopérant avec le maître-cylindre (2), caractérisé en ce que les dispositifs de soupape sont agencés sous la forme de soupapes électromagnétiques (16,17), qui sont commandées d'une manière retardée dans le temps dans le cas d'une accumulation de pression par l'unité de commande électronique (23) après identification du souhait de décélération du conducteur, des accumulateurs à basse pression (51,52), qui sont reliés aux freins de roues (7,8) lorsque les générateurs de pression de freinage (4,5) sont dans la position relâchée, étant raccordés aux chambres de pression des générateurs de pression de freinage (4,5).

2. Système d'actionnement de freins à antiblocage et régulation électronique selon la revendication 1, caractérisé en ce que la liaison entre l'accumulateur à basse pression (51,52) et la chambre de pression du générateur de pression de freinage (4,5) peut être bloquée au moyen d'un dispositif formant soupape (61,62) pouvant être actionné sous l'effet du déplacement du piston (34,35) du générateur de pression.

3. Système d'actionnement de freins à antiblocage et régulation électronique selon la revendication 2, caractérisé en ce que le dispositif formant soupape (61,62) est formé par au moins un perçage (61), qui est formé dans le piston (34,35) du générateur de pression, est relié à l'accumulateur à basse pression (51,52), débouche dans la chambre de pression et coopère avec un manchon d'étanchéité (62) disposé à une certaine distance axiale.

4. Système d'actionnement de freins à antiblocage et régulation électronique selon l'une des revendications 1 à 3, caractérisé en ce que l'accumulateur à basse pression (51,52) est relié au maître-cylindre (2) par l'intermédiaire d'une soupape antiretour (53,54), qui débouche dans le maître-cylindre (2).

5. Système d'actionnement de freins à antiblocage et régulation électronique selon l'une des revendications précédentes, dans lequel les générateurs de pression de freinage (4,5) sont formés par des vérins hydrauliques (24,25), dont les pistons (34,35) peuvent être actionnés au moyen de moteurs à courant continu (44,45) pouvant être commandés électriquement, caractérisé en ce que l'actionnement s'effectue à l'aide d'un dispositif d'entraînement à vis à billes (41), monté entre le piston (34,35) et le moteur à courant continu (44,45), l'arbre (43) du moteur à courant continu (44,45) étant creux et logeant la broche (42) du dispositif d'entraînement à vis à billes.

6. Système d'actionnement de freins à antiblocage et régulation électronique selon la revendication 5, caractérisé en ce que la broche (42) est pourvue d'une tige transversale (55) disposée perpendiculairement à l'axe de la broche et qui porte un galet (56) qui est guidé dans une fente (58) formée dans un tube de guidage (57) disposé coaxialement par rapport à l'arbre (43).

7. Système d'actionnement de freins à antiblocage et régulation électronique selon la revendication 5 ou 6, caractérisé en ce que la transmission de la force d'actionnement par la broche (42) aux pistons (34,35) des générateurs de pression s'effectue à l'aide d'un organe de transmission de force (59) guidé dans le piston (34,35) du générateur de pression et sur lequel le piston (34,35) du générateur de pression est fixé moyennant l'interposition d'un ressort de pression (60).

8. Système d'actionnement de freins à antiblocage et régulation électronique selon au moins selon les revendications 3 et 5, caractérisé en ce que la soupape électromagnétique (16,17) et la soupape antiretour (53,54) ainsi que l'accumulateur à basse pression (51,52) sont disposées dans le boîtier du vérin hydraulique (24,25).
